# FASCICULE DE BREVET EUROPEEN

(11) **EP 2 399 819 B1**
(45) Date de publication et mention de la délivrance du brevet: **09.10.2013**
(21) Numéro de dépôt: 11170974.7
(22) Date de dépôt: 22.06.2011
(51) Int. Cl.: B64C 1/06, B64C 1/40

(54) **Dispositif pour le maintien d'un matelas isolant et la fixation de systèmes en deux pièces**
Zweiteilige Vorrichtung zur Fixierung einer Dämmmatte und Befestigung von Systemen
Device in two parts for supporting an insulating mattress and for attaching systems

(30) Priorité: 22.06.2010 FR 1002614
(43) Date de publication de la demande: 28.12.2011
(73) Titulaire: Airbus Operations, 31060 Toulouse (FR)
(72) Inventeur: Sabadie, Lionel, 31200 Toulouse (FR); Fauvet, Maximilien, 31200 Toulouse (FR); Rebolloso, Laurent, 31480 Le Gres (FR); Dal-Cin, Michel, 31880 La Salvetat Saint Gilles (FR)
(74) Mandataire: Santarelli

(56) Documents cités:
- EP-A1- 0 561 107
- US-A- 5 680 680
- US-A- 5 797 573

## Description

La présente invention concerne un dispositif de maintien de matelas isolant et de fixation de systèmes en deux pièces. La présente invention concerne le domaine aéronautique et plus particulièrement la construction d'aéronefs.

De manière habituelle, un fuselage d'aéronef présente une ossature formée de cadres et de lisses. L'enveloppe extérieure du fuselage est fixée sur les cadres et les lisses. Lorsque l'aéronef est destiné à voler à haute altitude, compte tenu des températures extérieures auxquelles il doit être soumis, il est nécessaire de réaliser une isolation thermique du fuselage. Il est alors connu de recouvrir la face intérieure de la peau formant l'enveloppe du fuselage de matelas isolants se présentant sous la forme de lés ou de panneaux souples. Ces matelas sont appelés matelas de peau. Il convient également d'isoler thermiquement chaque cadre. On utilise alors des matelas présentant une structure similaire à celle des matelas de peau mais dont la forme est adaptée pour venir enrober les cadres à l'intérieur du fuselage. Ces matelas sont appelés par la suite matelas de cadre.

Les cadres du fuselage servent également de supports pour divers systèmes. On entend ici par systèmes des équipements de l'aéronef ainsi que les câblages électriques, les réseaux hydrauliques, les réseaux pneumatiques, les conduits d'air pour la ventilation et la pressurisation à l'intérieur du fuselage, ....

Les cadres du fuselage sont alors percés de trous d'une part pour permettre la fixation des matelas isolants et d'autre part pour permettre le support et la fixation des systèmes. Ces trous fragilisent les cadres et doivent parfois être compensés par des renforts structuraux, ce qui complique donc la conception de l'aéronef.

En outre, en ce qui concerne les matelas, il convient d'adapter leur forme aux divers dispositifs de fixation prévus. Des trous, des coupes, entailles, ... doivent être prévus dans les matelas pour permettre le passage d'un dispositif de fixation, s'adapter à la structure du fuselage, .... Les trous et entailles réalisés dans les matelas dégradent leur performance d'isolation et sont sources de ponts thermiques (et acoustiques) et elles réduisent donc les performances des matelas.

Il convient donc de limiter à la fois le nombre de trous réalisés dans la structure de l'aéronef (cadre et/ou autre pièce structurelle) ainsi que dans les matelas isolants (matelas de peau et matelas de cadre).

Le document FR-2 933 376 montre ainsi par exemple un dispositif de fixation de matelas isolant et un procédé de pose de matelas isolant dans un fuselage d'aéronef permettant de limiter le nombre de trous à réaliser dans les cadres de l'aéronef. Le dispositif décrit dans ce document comprend une portion formant crochet adaptée pour venir coiffer une aile du cadre et pincer ce dernier seule ou en coopération avec un élément structurel de l'aéronef de façon à assurer la fixation du dispositif au cadre. Une forme de réalisation de ce dispositif comprend une première pince de matelas de cadre porté par une première membrure destinée à s'étendre du premier côté du cadre, une deuxième pince de matelas de cadre portée par une deuxième membrure destinée à s'étendre du second côté du cadre, une première pince de matelas de peaux portée par la première membrure et une deuxième de matelas de peaux portée par la deuxième membrure.

Un autre exemple de l'art antérieur est fourni par le document US 5,680,680 A1.

La présente invention a alors pour but de fournir un système permettant d'une part le maintien de matelas isolants et d'autre part le support de systèmes en limitant à la fois les trous à réaliser dans la structure de l'aéronef (cadre, ... ) et d'autre part dans lesdits matelas isolants.

Avantageusement, la mise en oeuvre d'un tel système sera facile et/ou d'un prix de revient limité et/ou d'une masse aussi réduite que possible.

À cet effet, la présente invention propose un dispositif pour le maintien d'un matelas isolant et la fixation de systèmes dans un aéronef, comportant une base présentant deux extrémités à partir de chacune desquelles s'étend un bras.

Selon la présente invention, un bras est articulé sur la base, et ledit dispositif comporte en outre au moins un support pour recevoir un système.

La structure comportant la base et les deux bras permet de monter le dispositif sur un cadre et de maintenir un matelas isolant. Le fait d'avoir un bras articulé permet de faciliter le montage du dispositif et un meilleur maintien du matelas isolant.

Selon la présente invention, il est prévu que la base de forme allongée définit un plan, dit plan de référence, comportant deux bords longitudinaux, et qu'à une extrémité de la base, chaque bord longitudinal présente un rebord s'étendant à partir de la base du même côté que les bras. Ces rebords peuvent être par exemple utilisés pour un positionnement du dispositif sur une structure d'aéronef, comme il sera indiqué plus loin. Ils peuvent aussi être utilisés pour réaliser un verrouillage du bras mobile par rapport à la base.

Comme suggéré au paragraphe précédent, des moyens de verrouillage sont donc avantageusement prévus entre le bras articulé et la base. Dans le cas où comme prévu plus haut, la base est munie de rebords, le bras articulé peut par exemple présenter au moins un crochet élastique ; au moins un rebord présente alors avantageusement au moins une encoche destinée à coopérer avec un crochet élastique correspondant pour maintenir le bras articulé dans une position prédéterminée par rapport à la base. Dans cette variante de réalisation, une rainure s'étendant depuis la face plane de la base jusqu'à l'encoche est avantageusement réalisée dans le rebord correspondant. Cette rainure permet notamment d'accéder avec l'extrémité libre d'un tournevis aux moyens de verrouillage. De la sorte, il est possible d'accéder facilement à ces moyens de verrouillage, par exemple pour réaliser un déverrouillage.

La présente invention concerne également un tronçon de fuselage d'aéronef, comportant des cadres, une peau extérieure fixée sur les cadres, au moins un matelas isolant, caractérisé en ce qu'un matelas isolant est fixé sur un cadre à l'aide d'au moins un dispositif tel que décrit ci-dessus. Dans un tel tronçon, ledit cadre se trouve par exemple au moins partiellement entre les bras dudit dispositif et ledit matelas isolant se trouve entre ledit cadre et ledit dispositif.

Dans une forme de réalisation préférée de l'invention, le tronçon de fuselage d'aéronef selon l'invention est tel que le cadre est une pièce profilée de section transversale en Z avec une âme et deux rebords, et en ce qu'à l'extrémité du cadre opposée à la peau extérieure, le cadre porte des languettes qui s'étendent sensiblement dans le prolongement du rebord correspondant mais du côté opposé de l'âme de manière à former localement une extrémité présentant une section en T.

Dans un tronçon de fuselage d'aéronef tel que défini au paragraphe précédent, le dispositif de maintien de matelas isolant est tel que la base de forme allongée définit un plan, dit plan de référence et comporte deux bords longitudinaux et tel qu'à une extrémité de la base, chaque bord longitudinal présente un rebord s'étendant à partir de la base du même côté que les bras. Alors, les deux rebords sont disposés de part et d'autre d'une languette.

Enfin, la présente invention concerne également un aéronef, caractérisé en ce qu'il comporte au moins un tronçon de fuselage tel que décrit ci-dessus.

Des détails et avantages de la présente invention ressortiront mieux de la description qui suit, faite en référence aux dessins schématiques annexés sur lesquels :
- la figure 1 montre en perspective un dispositif selon la présente invention,
- la figure 2 est montre en élévation le dispositif de la figure 1,
- la figure 3 montre une première pièce du dispositif montré sur les figures 1 et 2,
- la figure 4 montre une seconde pièce du dispositif montré sur les figures 1 et 2,
- les figures 5 est une première vue en perspective d'un dispositif selon la présente invention, tel que montré sur les figures 1 et 2, positionné sur une structure d'aéronef,
- la figure 6 correspond à la figure 5 sous un autre angle de vue,
- la figure 7 montre la pièce montrée sur la figure 3 en position sur la structure des figures 5 et 6, et
- la figure 8 montre un dispositif selon la présente invention portant des systèmes et monté sur une structure d'aéronef en maintenant des matelas isolants.

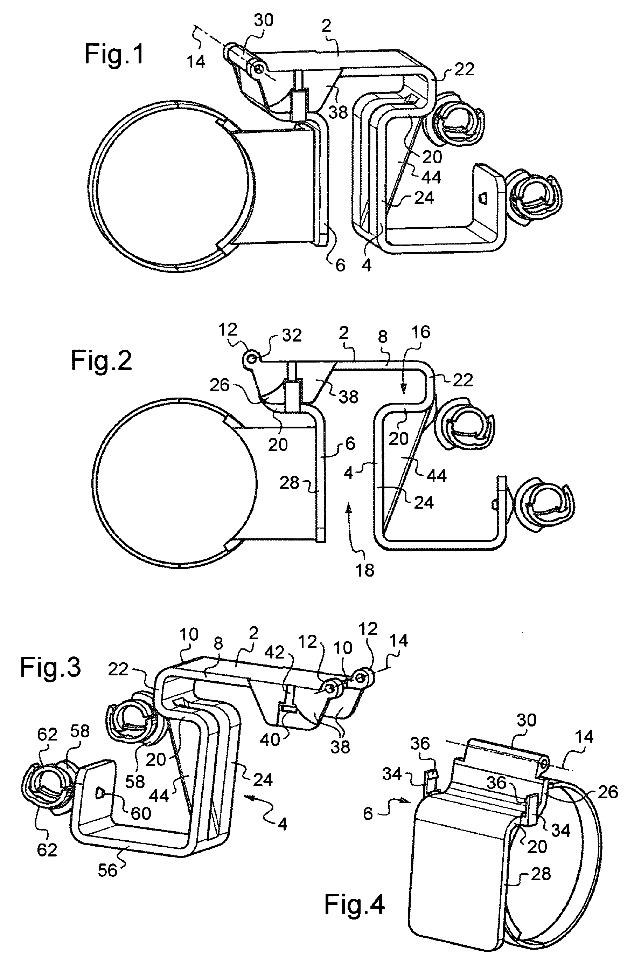

Les figures 1 et 2 représentent un dispositif en forme d'étrier comportant une base 2 de laquelle s'étendent deux bras. Arbitrairement, on supposera que la base 2 s'étend dans un plan horizontal et que les bras s'étendent à partir de la base 2 verticalement vers le bas. Un premier bras, représenté à droite sur les figures 1 et 2, est appelée bras fixe 4. L'autre bras, à gauche sur les figures 1 et 2, est appelé bras mobile 6. Alors que le bras fixe 4 ne forme qu'une seule pièce avec la base 2, le bras mobile 6 est une pièce distincte articulée sur la base 2.

La base 2 est plane et de forme rectangulaire allongée. Elle présente ainsi deux bords longitudinaux 8 et deux bords transversaux 10. Le bras fixe 4 et le bras mobile 6 sont portés par les bords transversaux 10. Du côté du bras mobile 6, la base 2 porte sur son bord transversal 10, aux extrémités de celui-ci, à chaque fois un palier 12. Ces deux paliers 12 définissent un axe de pivotement 14 horizontal, sensiblement parallèle aux bords transversaux 10 de la base 2.

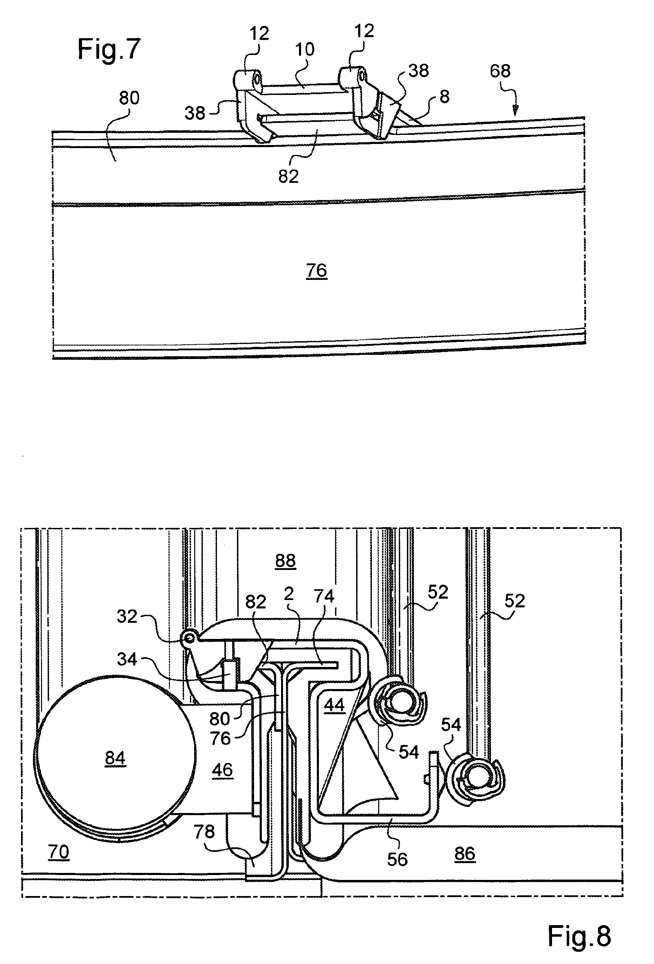

Sur les figures 1 et 2, le dispositif selon l'invention est montré dans sa position dite fermée, c'est-à-dire dans une position dans laquelle il peut réaliser le maintien d'un matelas isolant sur une structure d'aéronef comme illustré par exemple sur la figure 8.

Dans cette position fermée, l'espace défini entre les deux bras, le bras fixe 4 et le bras mobile 6, présente une section en T. On trouve ainsi du côté de la base 2 entre le bras fixe 4 et le bras mobile 6 un premier espace 16 de grande largeur qui se rétrécit et au niveau de la base du T, un second espace 18 de largeur moindre. Ainsi, chaque bras présente un épaulement 20 s'étendant parallèlement à la base 2. Le bras fixe 4 présente entre son épaulement 20 et la base 2 une première partie verticale 22 et au-delà de son épaulement 20, s'étendant du côté opposé à la base 2, une seconde partie verticale 24. De même, le bras mobile 6 présente entre son épaulement 20 et la base 2 une première partie verticale 26 et au-delà de son épaulement 20, s'étendant dans la direction opposée à la base 2 (en position fermée du dispositif), une seconde partie verticale 28.

L'extrémité libre de la première partie verticale 26 porte une partie tubulaire 30 destinée à venir prendre place entre les deux paliers 12 de la base 2. Un axe 32 s'étendant à la fois dans les paliers 12 et dans la partie tubulaire 30 permet de relier le bras mobile 6 à la base 2 en formant une liaison pivot.

Des moyens sont prévus pour verrouiller le bras mobile 6 dans sa position fermée représentée sur les figures 1 et 2. On remarque sur la figure 4 que l'épaulement 20 du bras mobile 6 porte de chaque côté un crochet. Ce crochet est formé à chaque fois d'une patte 34 s'étendant verticalement en direction de la base 2 (figure 2) et l'extrémité libre de la patte 34 porte une dent 36 qui forme une saillie en direction de la patte 34 opposée.

Pour coopérer avec les crochets du bras mobile 6, la base 2 présente sur ses bords longitudinaux 8, du côté de l'extrémité de la base portant le bras mobile 6, à chaque fois un rebord 38 s'étendant verticalement vers le bas à partir de la base 2. Ces deux rebords 38 forment ainsi deux oreilles de part et d'autre de la base 2.

Chaque rebord 38 présente une lumière 40 de forme adaptée à la forme de la dent 36 correspondante. Dans la forme de réalisation représentée, les lumières 40 présentent une forme rectangulaire allongée.

On remarque également sur les figures 1 à 3 la présence d'une rainure 42 s'étendant depuis la face plane supérieure de la base 2 vers la lumière 40. Cette rainure 42 permet l'accès aux crochets correspondants du bras mobile 6 afin de permettre le déverrouillage du bras mobile 6 par rapport à la base 2 à l'aide par exemple d'un tournevis.

Le bras fixe 4 présente, entre son épaulement 20 et sa seconde partie verticale 24, une nervure 44 destinée à faciliter sa préhension.

Comme on peut le voir sur les dessins joints, le dispositif porte des supports de systèmes. Tant le bras fixe 4 que le bras mobile 6 sont utilisés pour recevoir au moins un support de systèmes. Ainsi, la seconde partie verticale 28 du bras mobile 6 porte un premier support de conduit 46. Ce dernier est formé par un socle 48 et un collier 50. Le socle 48 présente une forme profilée en L. Une branche du L sert à la fixation du support de conduit 46 sur la seconde partie verticale 28 du bras mobile 6, par exemple par vissage. L'autre branche du socle porte quant à elle le collier 50. Les dimensions de ce dernier sont par exemple adaptées aux dimensions d'un conduit d'air habituellement utilisé dans l'aéronautique.

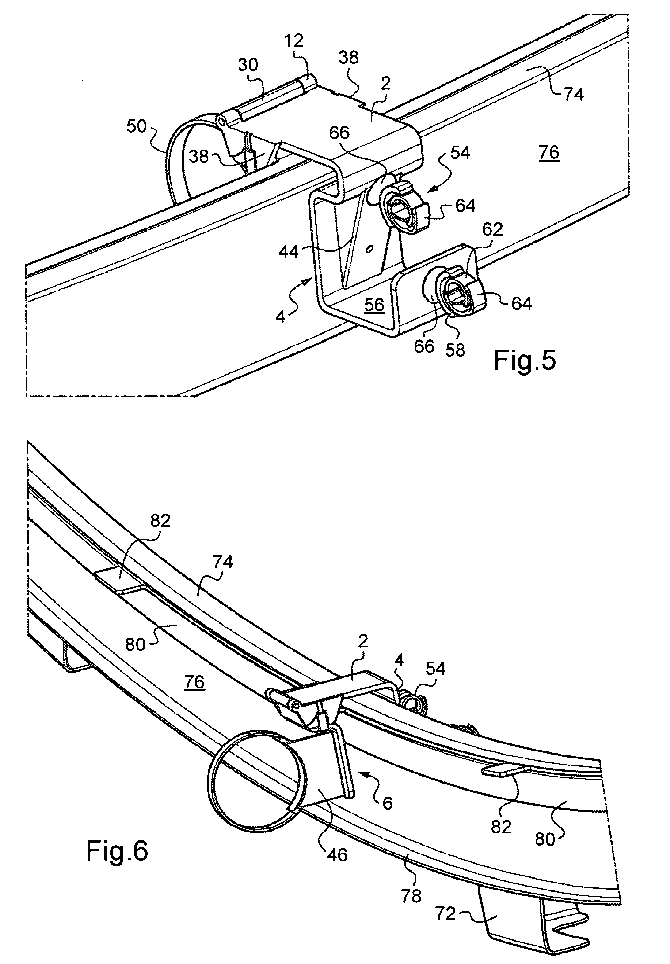

Dans la forme de réalisation représentée aux dessins le bras fixe 4 sert quant à lui à la fixation de conduits électriques 52. A cette fin, des seconds supports de conduit 54 sont prévus. On remarque par exemple sur la figure 5, qu'un tel support de conduit 54 est fixé sur la nervure 44. On remarque sur cette même figure que le bras fixe 4 a été adapté dans sa forme pour porter également un autre support de conduit 54. Dans la forme de réalisation représentée sur les dessins, il a été choisi de prolonger la seconde partie verticale 24 du bras fixe 4 par une patte 56 en L. Cette patte 56 présente une partie horizontale s'étendant à partir du bras fixe 4 vers l'extérieur du dispositif et cette partie horizontale porte à son extrémité une partie verticale qui s'étend vers le haut en direction de la base 2. Cette partie verticale porte elle aussi un support de conduit 54.

Chaque support de conduit 54 comporte une base 58 surmontant un pied 60 et portant elle-même deux mâchoires 62. La base 58 présente la forme d'une bande incurvée. Chacune de ses deux extrémités forme une charnière sur laquelle est articulée une mâchoire 62 de manière à pouvoir pivoter par rapport à la base 58. Chacune des mâchoires 62 se présente aussi sous la forme globale d'une bande incurvée. Les deux mâchoires 62 sont reliées entre elles par une troisième charnière.

Sur les figures, les supports de conduits 54 sont montrés en position fermée. En position ouverte, les mâchoires 62 sont pivotées d'environ 90° vers l'extérieur par rapport à la position montrée sur les figures et forment ainsi un W. En venant appuyer un conduit électrique 52 au centre de ce W, les mâchoires 62 se referment pour venir dans la position montrée sur les figures ci-jointes et emprisonner le conduit électrique 52 correspondant. On peut remarquer que grâce à la présence d'une languette extérieure 64 associée à un jeu de crochets, le support de conduit 54 est verrouillé en position fermée, interdisant tout retrait involontaire du conduit électrique 52 hors du logement prévu dans le support de conduit 54.

Le pied 60 d'un second support de conduit 54 comporte une platine 66 circulaire de laquelle s'étend, du côté opposé à la base 58, une tige présentant une tête tronconique visible par exemple sur la figure 3. Cette dernière est réalisée dans une matière élastique telle du caoutchouc ou un matériau synthétique similaire. Son sommet forme un cercle de diamètre inférieur au diamètre d'un alésage formé dans le bras fixe 4. La base de la tête tronconique forme quant à elle un cercle de diamètre supérieur au diamètre dudit alésage. De la sorte, grâce à l'élasticité du matériau, la tête tronconique peut traverser l'alésage mais son retrait, tout du moins involontaire, est empêché.

Les figures 5 à 8 illustrent le montage du dispositif illustré sur les figures 1 à 4 sur une structure d'aéronef. Cette structure comporte notamment un cadre 68 sur lequel est fixée une peau 70 extérieure (figure 8) à l'aide de pièces appelées stabilisateurs 72.

Le cadre 68 est une pièce profilée en forme de Z. En reprenant la même orientation que dans la description qui précède, le cadre 68 présente ainsi un rebord supérieur 74, une âme 76 et un rebord inférieur 78. Le cadre 68 est une pièce profilée en arc de cercle. On suppose toutefois ici en première approximation qu'il s'agit d'une pièce profilée rectiligne. Dans cette approximation, on suppose alors que l'âme 76 s'étend dans un plan vertical (parallèle aux parties verticales du bras fixe 4 et du bras mobile 6 (en position fermée) et que le rebord supérieur 74 et le rebord inférieur 78 s'étendent quant à eux perpendiculairement à l'âme 76 dans un plan sensiblement horizontal.

Une bande 80 est fixée sur l'âme 76, dans la partie supérieure de celle-ci sur le côté opposé au rebord supérieur 74. Cette bande 80 porte, régulièrement espacées, des languettes 82 qui s'étendent parallèlement et à même hauteur que le rebord supérieur 74. Ainsi, au niveau d'une languette 82, l'ensemble formé par le cadre 68, la bande 80 et la languette 82 correspondante forment un ensemble présentant, dans sa partie supérieure, une section transversale en T.

La forme de chaque languette 82 est adaptée au dispositif selon la présente invention. En effet, comme illustré sur la figure 7, les dimensions de la languette 82 sont adaptées à l'espace se trouvant entre les deux rebords 38 de la base 2. Ainsi, ces rebords 38 servent d'une part au verrouillage de la partie du bras mobile 6 sur la base 2 comme décrit précédemment, et d'autre part au positionnement d'un dispositif selon l'invention sur la structure de l'aéronef. Lorsque le dispositif selon l'invention est dans sa position fermée, le premier espace 16 défini entre le bras fixe 4 et le bras mobile 6 à proximité de la base 2 reçoit la languette 82 et le rebord supérieur 74. Le second espace 18 de largeur moindre est disposé quant à lui au niveau de l'âme 76 du cadre 68.

La figure 8 illustre le montage d'un dispositif selon l'invention sur une structure d'aéronef en maintenant d'une part un matelas isolant et en supportant d'autre part deux conduits électriques 52 et un conduit d'air 84. Sur la droite de la figure 8, on remarque la présence d'un matelas isolant contre la peau 70 extérieure. Un tel matelas isolant se présente sous la forme d'un lé s'étendant entre deux cadres 68. Un tel matelas est appelé généralement matelas de peau 86. Pour assurer une bonne continuité de l'isolation, entre deux matelas de peau voisins, il est également prévu un matelas isolant, appelé matelas de cadre 88 disposé autour du cadre 68. La liaison entre le matelas de cadre 88 et le matelas de peau 86 peut être réalisée par exemple par un système de liaison à boucles et crochets plus connu sous la marque déposée Velcro.

Comme on peut le voir sur la figure 8, le dispositif montré sur les figures 1 à 4 est positionné au-dessus du cadre 68 et du matelas de cadre 88 qu'il vient maintenir par serrage.

On peut prévoir une découpe dans le matelas de cadre 88 au niveau de chaque languette 82 : ceci permettrait d'indexer la position du matelas de cadre par rapport à la structure de l'aéronef et participerait au bon maintien de ce matelas sur la structure de l'aéronef. Une autre adaptation du matelas peut aussi être prévue à cet endroit.

Dans la variante de réalisation représentée, les conduits électriques 52 sont disposés alors d'un côté du cadre 68 et le conduit d'air 84 de l'autre côté de ce cadre. Bien entendu, on pourrait prévoir d'autres configurations pour les conduits électriques et le conduit d'air. On pourrait avoir un support pour le conduit d'air sur le bras fixe et inversement au moins un support de conduit électrique sur le bras mobile. Un même bras peut porter des supports de systèmes différents.

Bien entendu, pour la mise en place du dispositif selon l'invention, le bras mobile 6 est tout d'abord pivoté par rapport à la position fermée montrée sur les dessins. On vient alors positionner la base 2 et le bras fixe 4 sur la structure de l'aéronef, en venant pincer le matelas de cadre 88. En faisant alors pivoter le bras mobile 6 jusqu'à sa position fermée (et verrouillée) on vient compléter le serrage du matelas de cadre 88 sur le cadre 68. Les conduits électriques 52 et les conduits d'air 84 sont positionnés de préférence lorsque tous les dispositifs selon la présente invention ont été mis en place.

Le dispositif décrit ci-dessus permet donc le maintien d'un matelas isolant sur un cadre ainsi que la fixation de systèmes par rapport à la structure d'un aéronef. Un avantage de ce dispositif est qu'il peut facilement s'adapter notamment en ce qui concerne la fixation de systèmes. Comme mentionné plus haut, les supports de systèmes sont modulables. La position des conduits et leur nombre peuvent être adaptés. Ainsi, le dispositif décrit ci-dessus peut s'adapter à de nombreuses solutions pour le passage des systèmes supportés et peut supporter tous types de systèmes, même différents de ceux représentés sur les dessins.

Le montage d'un dispositif selon l'invention peut se faire sans outils, ou tout du moins sans outils spécifiques. En outre, un tel dispositif est conçu pour pouvoir être facilement remonté et démonté dans la même position qu'avant démontage.

Enfin, un dispositif selon la présente invention est facile et rapide à mettre en oeuvre. Le temps de montage (et de démontage) est restreint. De plus si un dispositif selon l'invention est réalisé en matière synthétique, il est possible d'avoir un dispositif de poids réduit, ce qui est bien entendu avantageux pour un montage dans un aéronef.

La présente invention ne se limite pas à la forme de réalisation décrite ci-dessus à titre d'exemple non limitatif, ni aux variantes évoquées. Elle concerne également toutes les variantes de réalisation à la portée de l'homme du métier dans le cadre des revendications ci-après.

## Revendications

1. Dispositif pour le maintien d'un matelas isolant et la fixation de systèmes dans un aéronef, comportant :
- une base (2) présentant deux extrémités à partir de chacune desquelles s'étend un bras (4, 6), un bras (6) étant articulé sur la base (2), et
- au moins un support (46, 54) pour recevoir un système (52, 84),
**caractérisé en ce que** la base (2) de forme allongée définit un plan, dit plan de référence comportant deux bords longitudinaux (8), et **en ce qu'**à une extrémité de la base (2), chaque bord longitudinal (8) présente un rebord de positionnement (38) destiné à coopérer avec une languette (82) portée par un cadre d'un fuselage de l'aéronef, lesdits rebords (38) s'étendant à partir de la base (2) du même côté que les bras (4, 6).

2. Dispositif selon la revendication 1, **caractérisé en ce que** des moyens de verrouillage (34, 36, 40) sont prévus entre le bras articulé (6) et la base (2).

3. Dispositif selon les revendications 1 ou 2, **caractérisé en ce que** le bras articulé (6) présente au moins un crochet élastique (34, 36), **en ce qu'**un rebord de positionnement (38) au moins présente au moins une encoche (40) destinée à coopérer avec un crochet élastique (34, 36) correspondant pour maintenir le bras articulé (6) dans une position prédéterminée par rapport à la base (2).

4. Dispositif selon la revendication 3, **caractérisé en ce qu'**une rainure (42) s'étendant depuis la face plane de la base (2) jusqu'à l'encoche (40) est réalisée dans le rebord (38) correspondant.

5. Tronçon de fuselage d'aéronef, comportant des cadres (68), une peau extérieure (70) fixée sur les cadres (68), au moins un matelas isolant (88),
**caractérisé en ce qu'**il comporte en outre au moins un dispositif de maintien selon l'une des revendications 1 à 4, ledit dispositif chevauchant un cadre (68) de façon à maintenir au moins un matelas isolant (88) sur ce cadre (68), les deux rebords de positionnement (38) du dispositif de maintien étant disposés de part et d'autre d'une languette (82) portée par le cadre à l'extrémité du cadre opposée à la peau extérieure.

6. Tronçon de fuselage d'aéronef selon la revendication 5, **caractérisé en ce que** le cadre (68) est une pièce profilée de section transversale en Z avec une âme (76) et deux rebords (74, 78), et **en ce qu'**à l'extrémité du cadre (68) opposée à la peau extérieure (70), le cadre (68) porte des languettes (82) qui s'étendent sensiblement dans le prolongement du rebord (74) correspondant mais du côté opposé de l'âme de manière à former localement une extrémité présentant une section en T.

7. Aéronef, **caractérisé en ce qu'**il comporte au moins un tronçon de fuselage selon l'une des revendications 5 à 6.

## Patentansprüche

1. Vorrichtung zum Halten einer Dämmmatte und zum Befestigen von Einrichtungen in einem Luftfahrzeug, enthaltend:
- ein Basisteil (2) mit zwei Enden, von denen jeweils ein Arm (4, 6) ausgeht, wobei ein Arm (6) an dem Basisteil (2) angelenkt ist, und
- zumindest einen Halter (46, 54) zum Aufnehmen einer Einrichtung (52, 84),
**dadurch gekennzeichnet, dass**
das Basisteil (2) länglicher Form eine Ebene, die sogenannte Referenzebene, definiert, die zwei Längsränder (8) aufweist,
und dass an einem Ende des Basisteils (2) jeder Längsrand (8) eine Positionierungsrandleiste (38) aufweist, die dazu bestimmt ist, mit einer Zunge (82) zusammenzuwirken, die von einem Spant eines Rumpfs des Luftfahrzeugs getragen wird, wobei die Randleisten (38) sich ausgehend von dem Basisteil (2) auf der gleichen Seite wie die Arme (4, 6) erstrecken.

2. Vorrichtung nach Anspruch 1,
**dadurch gekennzeichnet, dass** zwischen dem angelenkten Arm (6) und dem Basisteil (2) Verriegelungsmittel (34, 36, 40) vorgesehen sind.

3. Vorrichtung nach den Ansprüchen 1 oder 2,
**dadurch gekennzeichnet, dass** der angelenkte Arm (6) zumindest einen Federhaken (34, 36) aufweist,
dass zumindest eine Positionierungsrandleiste (38) zumindest eine Einkerbung (40) aufweist, die dazu bestimmt ist, mit einem entsprechenden Federhaken (34, 36) zusammenzuwirken, um den angelenkten Arm (6) in einer vorbestimmten Stellung bezüglich des Basisteils (2) zu halten.

4. Vorrichtung nach Anspruch 3,
**dadurch gekennzeichnet, dass** eine Nut (42), die sich von der ebenen Fläche des Basisteils (2) bis zur Einkerbung (40) erstreckt, in der entsprechenden Randleiste (38) ausgebildet ist.

5. Rumpfabschnitt eines Luftfahrzeugs, enthaltend Spante (68), eine Außenhaut (70), die an den Spanten (68) befestigt ist, und zumindest eine Dämmmatte (88),
**dadurch gekennzeichnet, dass** er ferner zumindest eine Haltevorrichtung nach einem der Ansprüche 1 bis 4 aufweist, wobei die Vorrichtung einen Spant (68) so übergreift, dass sie zumindest eine Dämmmatte (88) an diesem Spant (68) hält, wobei die beiden Positionierungsrandleisten (38) der Haltevorrichtung beiderseits einer Zunge (82) angeordnet sind, die von dem Spant an dem der Außenhaut entgegengesetzten Ende des Spants getragen ist.

6. Rumpfabschnitt eines Luftfahrzeugs nach Anspruch 5,
**dadurch gekennzeichnet, dass** der Spant (68) ein profiliertes Teil mit Z-förmigem Querschnitt mit einem Steg (76) und zwei Randschenkeln (74, 78) ist, und dass an dem der Außenhaut (70) entgegengesetzten Ende des Spants (68) der Spant (68) Zungen (82) trägt, die sich im Wesentlichen in der Verlängerung des entsprechenden Randschenkels (74) erstrecken, jedoch auf der entgegengesetzten Seite des Stegs, so dass bereichsweise ein Ende mit einem T-förmigen Querschnitt gebildet ist.

7. Luftfahrzeug,
**dadurch gekennzeichnet, dass** es zumindest einen Rumpfabschnitt nach einem der Ansprüche 5 bis 6 aufweist.

## Claims

1. Device for holding an insulating blanket and for fastening systems in an aircraft, comprising:
- a base (2) having two ends from each of which there extends an arm (4, 6), one arm (6) being hinged on the base (2), and
- at least one support (46, 54) for receiving a system (52, 84),
**characterized in that** the base (2) of elongated shape defines a plane, referred to as reference plane, comprising two longitudinal edges (8), and **in that** at one end of the base (2), each longitudinal edge (8) has a positioning flange (38) adapted to cooperate with a tab (82) carried by a frame: of a fuselage of the aircraft, said flanges (38) extending from the base (2) on the same side as the arms (4, 6).

2. Device according to claim 1, **characterized in that** locking means (34, 36, 40) are provided between the hinged arm (6) and the base (2).

3. Device according to claims 1 or 2, **characterized in that** the hinged arm (6) has at least one elastic hook (34, 36), **in that** at least one positioning flange (38) has at least one slot (40) adapted to cooperate with a corresponding elastic hook (34, 36) for holding the hinged arm (6) in a predetermined position in relation to the base (2).

4. Device according to claim 3, **characterized in that** a groove (42) extending from the planar face of the base (2) as far as the slot (40) is made in the corresponding flange (38).

5. Aircraft fuselage section, comprising frames (68), an outer skin (70) fastened onto the frames (68), at least one insulating blanket (88),
**characterized in that** it further comprises at least one holding device according to one of claims 1 to 4, said device straddling a frame (68) so as to hold at least one insulating blanket (88) onto said frame (68), the two positioning flanges (38) of the holding device being disposed on respective opposite sides of a tab (82) carried by the frame at the opposite end of the frame to the outer skin.

6. Aircraft fuselage section according to claim 5, **characterized in that** the frame (68) is a member of profiled cross-section with a Z-shaped cross-section with a web (76) and two flanges (74, 78), and **in that** at the opposite end of the frame (68) to the outer skin (70), the frame (68) bears tabs (82) which extend substantially in line with the corresponding flange (74) but on the opposite side of the web so as to form locally an end having a T-shaped cross-section.

7. An aircraft, **characterized in that** it comprises at least one fuselage section according to one of claims 5 to 6.
